# EUROPEAN PATENT APPLICATION

(11) **EP 2 704 087 A1**
(43) Date of publication of application: **05.03.2014**
(21) Application number: 13182237.1
(22) Date of filing: 29.08.2013
(51) Int. Cl.: G06Q 30/02

(54) **System and method of providing additional information about group of devices**

(30) Priority: 30.08.2012 KR 20120095957
(71) Applicant: Samsung Electronics Co., Ltd, Gyeonggi-do 443-742 (KR)
(72) Inventor: Lee, Hyun-jung, Seoul (KR)
(74) Representative: Birchenough, Lewis

(57) **Abstract**

A system and method of providing additional information with respect to a group of devices. A method of receiving additional information with respect to a group including first and second devices, the method performed by the first device, includes operations of receiving user-interested information from a second device; obtaining common interest information with respect to a user of the first device and a user of the second device, based on user-interested information of the first device and the user-interested information of the second device; forming a group based on the common interest information with respect to the first device and the second device; providing the common interest information and group information about the group to a server; and receiving the additional information, with respect to the common interest information, from the server.

## Description

### CROSS-REFERENCE TO RELATED APPLICATIONS

This application claims the priority benefit of Korean Patent Application No. 10-2012-0095957, filed on August 30, 2012, in the Korean Intellectual Property Office, the disclosure of which is incorporated herein in its entirety by reference.

### BACKGROUND

### 1. Field

Example embodiments of the present disclosure relate to a system and method of providing additional information with respect to a group formed based on a plurality of pieces of user-interested information of devices.

### 2. Description of the Related Art

Due to development in network technologies, a user of a device may exchange various types of information with another device user via the device. Also, the user may receive various types of additional information, such as advertisement information, coupon information, local information, or the like via the device.

However, various types of additional information are indiscreetly provided to the device, and it is difficult for a plurality of devices to share the additional information. The user of the device may desire to share information with other users of other devices having a similar propensity. However, it is required for an information providing server, in addition to an existing information providing server, to efficiently provide appropriate additional information to a plurality of devices.

Accordingly, an improvement relating to providing additional information to the plurality of devices is needed.

### SUMMARY

Additional aspects and/or advantages will be set forth in part in the description which follows and, in part, will be apparent from the description, or may be learned by practice of the invention.

The present disclosure provides a system and method of forming a group of devices by using common interest information obtained based on a plurality of pieces of user-interested information of the device; and providing predetermined additional information with respect to the group.

According to an aspect of the present disclosure, there is provided a method of receiving additional information with respect to a group including first and second devices, the method performed by the first device and including operations of receiving user-interested information from the second device; obtaining common interest information with respect to a user of the first device and a user of the second device, based on user-interested information of the first device and the user-interested information of the second device; forming a group based on the common interest information with respect to the first device and the second device; providing the common interest information and group information about the group to a server; and receiving additional information, with respect to the common interest information, from the server.

The additional information may be provided from the server to the second device that is included in the group.

The operation of receiving the user-interested information from the second device may include an operation of receiving the user-interested information from the second device via near field communication.

The user-interested information may include at least one of an interest field, a gender, an age, a profession, a hobby, a relation, an area, a content usage history, an application usage history, and a phone-call time that are related to a user.

When the number of devices included in the group is equal to or greater than a preset number, the forming of the group may further include an operation of forming a sub-group of the group.

The operation of obtaining the common interest information may include an operation of generating the common interest information based on similarity between items that are included in the user-interested information of the first device and the user-interested information of the second device.

The group information may include at least one of a plurality of pieces of information about an age, a profession, a main interest, and an area that represent the group.

The additional information may include at least one of advertisement information, coupon information, and local information that are determined based on the common interest information.

The group information may include information about a number of devices included in the group, and the additional information may vary according to the number of the devices included in the group.

When the number of the devices included in the group is equal to or greater than a preset number, the additional information may include predetermined coupon information.

The method may further include operations of receiving user-interested information from a third device; updating the common interest information based on the user-interested information of the first device, the user-interested information of the second device, and the user-interested information of the third device; and updating the group based on the updated common interest information.

According to another aspect of the present disclosure, there is provided a method of providing additional information with respect to a group including first and second devices, the method performed by a server and including operations of receiving common interest information and group information from the first device, wherein the group information is about a group formed by the first device; determining the additional information based on the common interest information and the group information; and providing the additional information to the first device, wherein the common interest information is generated by the first device, based on user-interested information of the first device and user-interested information of the second device, and wherein the group is formed by the first device, based on the common interest information.

The method may further include an operation of providing the additional information to the second device that is included in the group.

The user-interested information of the second device may be provided from the second device to the first device via near field communication.

The user-interested information may include at least one of an interest field, a gender, an age, a profession, a hobby, a relation, an area, a content usage history, an application usage history, and a phone-call time that are related to a user.

When the number of devices included in the group is equal to or greater than a preset number, a sub-group of the group may be formed by the first device.

The common interest information may be generated by the first device, based on similarity between items that are included in the user-interested information of the first device and the user-interested information of the second device.

The group information may include at least one of a plurality of pieces of information about an age, a profession, a main interest, and an area that represent the group.

The additional information may include at least one of advertisement information, coupon information, and local information that are determined based on the common interest information.

The group information may include information about the number of devices included in the group, and the additional information may vary according to the number of the devices included in the group.

When the number of the devices included in the group is equal to or greater than a preset number, the additional information may include predetermined coupon information.

According to another aspect of the present disclosure, there is provided a method of providing additional information with respect to a group including first and second devices, the method performed by a server and including operations of receiving user-interested information from each of the first device and the second device; obtaining common interest information with respect to a user of the first device and a user of the second device, based on the user-interested information of the first device and the user-interested information of the second device; forming a group based on the common interest information with respect to the first device and the second device; generating the additional information based on the common interest information and group information about the group; and providing the additional information to the first device and the second device.

The user-interested information may include at least one of an interest field, a gender, an age, a profession, a hobby, a relation, an area, a content usage history, an application usage history, and a phone-call time that are related to a user.

When the number of devices included in the group is equal to or greater than a preset number, the operation of forming the group may further include an operation of forming a sub-group of the group.

The operation of obtaining the common interest information may include an operation of generating the common interest information based on similarity between items that are included in the user-interested information of the first device and the user-interested information of the second device.

The group information may include at least one of a plurality of pieces of information about an age, a profession, a main interest, and an area that represent the group.

Additional information may include at least one of advertisement information, coupon information, and local information that are determined based on the common interest information.

The group information may include information about the number of devices included in the group, and the additional information may vary according to the number of the devices included in the group.

When the number of the devices included in the group that is formed by the server is equal to or greater than a preset number, the additional information may include predetermined coupon information.

The method may further include operations of receiving user-interested information from a third device; updating the common interest information based on the user-interested information of the first device, the user-interested information of the second device, and the user-interested information of the third device; and updating the group based on the updated common interest information.

According to another aspect of the present disclosure, there is provided a device for receiving additional information with respect to a group of devices from a server, the device including an interest information obtaining unit for obtaining user-interested information from another device; a common interest information obtaining unit for obtaining common interest information with respect to a user of the device and a user of the other device, based on user-interested information of the device and the user-interested information of the other device; a group forming unit for forming a group of devices based on the common interest information with respect to the device and the other device; an information providing unit for providing the common interest information and group information about the group to a server; and an additional information receiving unit for receiving the additional information, with respect to the common interest information, from the server.

According to another aspect of the present disclosure, there is provided a server for providing additional information with respect to a group of devices, the server including a common interest information obtaining unit for obtaining common interest information from a first device; an additional information determining unit for determining the additional information based on the common interest information and group information about a group that is formed by the first device; and an additional information providing unit for providing the additional information to the first device, wherein the common interest information is obtained by the first device, based on user-interested information of the first device and user-interested information of a second device, and wherein the group of devices is formed by the first device, based on the common interest information.

According to another aspect of the present disclosure, there is provided a server for providing additional information with respect to a group of devices, the server including an interest information receiving unit for receiving user-interested information from each of a first device and a second device; a common interest information obtaining unit for obtaining common interest information with respect to a user of the first device and a user of the second device, based on the user-interested information of the first device and the user-interested information of the second device; a group of devices forming unit for forming a group based on the common interest information with respect to the first device and the second device; an additional information determining unit for determining the additional information based on the common interest information and group information about the group; and an additional information providing unit for providing the additional information to the first device and the second device.

According to another aspect of the present disclosure, there is provided a non-transitory computer-readable recording medium having recorded thereon a program which, when executed by a computer, performs the method according to the first aspect.

According to another aspect of the present disclosure, there is provided a non-transitory computer-readable recording medium having recorded thereon a program which, when executed by a computer, performs the method according to the second aspect.

According to another aspect of the present disclosure, there is provided a non-transitory computer-readable recording medium having recorded thereon a program which, when executed by a computer, performs the method according to the third aspect.

### BRIEF DESCRIPTION OF THE DRAWINGS

The above and other features and advantages of the present disclosure will become more apparent by describing in detail exemplary embodiments thereof with reference to the attached drawings in which:
FIG. 1 is a diagram illustrating a system for providing additional information to a group of devices, according to an example embodiment of the present disclosure;
FIG. 2 is a diagram illustrating a method of providing additional information to a group of devices, according to an example embodiment of the present disclosure;
FIG. 3 is a diagram illustrating a method of providing additional information to a group of devices, according to another example embodiment of the present disclosure;
FIG. 4 is a diagram illustrating a method of providing, by a server, additional information with respect to a group of devices to a first device when the first device receives advertisement information from the server, according to an example embodiment of the present disclosure;
FIG. 5 is a flowchart of a method of forming a group, performed by the first device or the server, according to an example embodiment of the present disclosure;
FIG. 6 is a flowchart of a method of determining additional information, performed by the server, according to an example embodiment of the present disclosure;
FIG. 7 illustrates an example of a user interface that is displayed by one of devices so as to generate user-interested information;
FIG. 8 is a block diagram of the first device, according to an example embodiment of the present disclosure; and
FIG. 9 is a block diagram of the server, according to an example embodiment of the present disclosure.

### DETAILED DESCRIPTION

Reference will now be made in detail to the embodiments, examples of which are illustrated in the accompanying drawings, wherein like reference numerals refer to the like elements throughout. The embodiments are described below to explain the present invention by referring to the figures.

Hereinafter, the present disclosure will now be described more fully with reference to the accompanying drawings, in which exemplary embodiments of the disclosure are shown. The disclosure may, however, be embodied in many different forms and should not be construed as being limited to the embodiments set forth herein; rather, these embodiments are provided so that this disclosure will be thorough and complete, and will fully convey the concept of the disclosure to those of ordinary skill in the art. In the following description, well-known functions or constructions are not described in detail so as not to obscure the disclosure with unnecessary detail. Also, throughout the specification, like reference numerals in the drawings denote like elements.

Throughout the specification, it will also be understood that when an element is referred to as being "connected to" another element, it can be directly connected to the other element, or electrically connected to the other element while intervening elements may also be present. Also, when a part "includes" or "comprises" an element, unless there is a particular description contrary thereto, the part can further include other elements, not excluding the other elements.

Expressions such as "at least one of," when preceding a list of elements, modify the entire list of elements and do not modify the individual elements of the list.

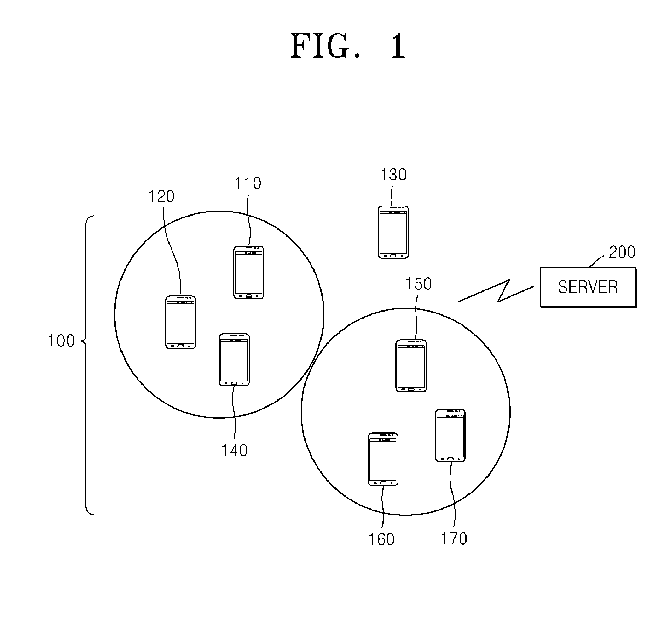

FIG. 1 is a diagram illustrating a system for providing additional information to a group of devices, according to an example embodiment of the present disclosure.

Referring to FIG. 1, the system according to the present embodiment includes a plurality of devices 100 and a server 200. For example, devices 110 through 170 may be included in the plurality of devices 100. In the system, some of the devices 100 may form a group, and the server 200 may generate additional information with respect to the group, and then may provide the additional information to the devices included in the group. For example, in devices 110 through 170, devices 110, 120, and 140 may form a group, and devices 150, 160, and 170 may form another group.

Common interest information may be generated based on a plurality of pieces of user-interested information of the devices 110 through 170, and at least one group may be formed based on the common interest information. The user-interested information may be used to determine a user's interest, and may include at least one of an interest field, a gender, an age, a profession, a hobby, a relation, an area, a content usage history, an application usage history, and a phone-call time that are related to a user. The user-interested information described in this paragraph is exemplary, and thus, the present disclosure is not limited thereto. Also, the common interest information may be generated based on similarity between the plurality of pieces of user-interested information.

The server 200 may determine additional information with respect to a predetermined group, based on the common interest information, and may provide additional information that may vary according to the number of devices included in the group. The additional information may include at least one of advertisement information, coupon information, and local information, however, the present disclosure is not limited thereto.

Also, the server 200 may receive feedback information from the devices that have received the additional information, and may store the feedback information. The feedback information may include a user's evaluation with respect to the additional information, and information about a device operation using the additional information.

The devices 100 may exchange information via near field communication, however, the present disclosure is not limited thereto. That is, some or all of the devices 100 may exchange information via different communication methods. For example, the devices 110 and 120 from among the devices 110, 120, and 130 may be connected to each other via the near field communication, and the device 130 may be connected to the devices 110 and 120 via a predetermined web server.

Also, the devices 100 may include, but are not limited to, a smart phone, a mobile phone, a personal digital assistant (PDA), a laptop, a media player, a global positioning system (GPS) device, and mobile or non-mobile computing devices.

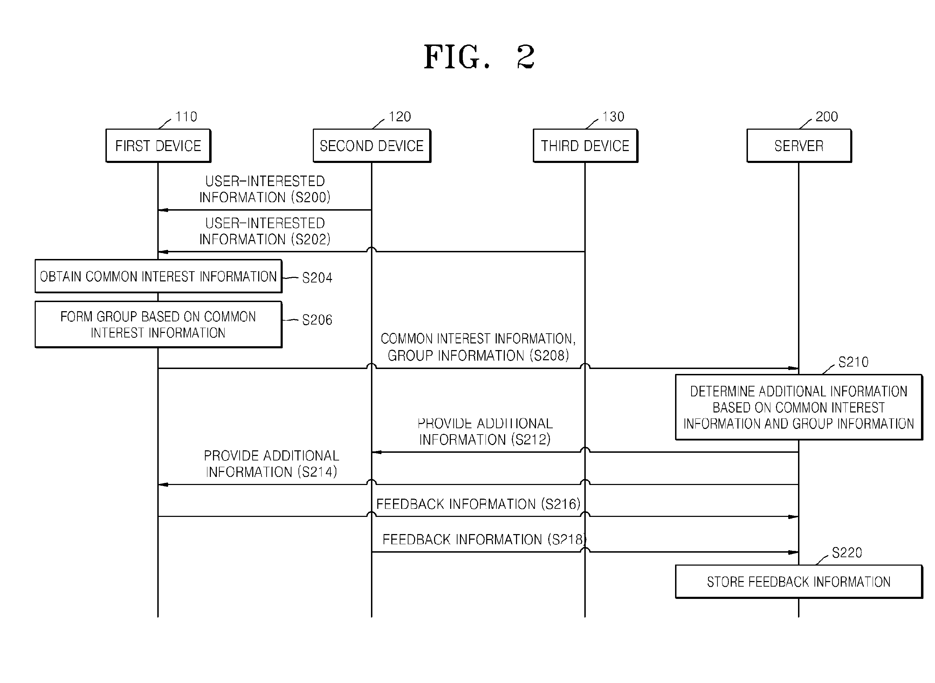

FIG. 2 is a diagram illustrating a method of providing additional information to a group of devices, according to an embodiment of the present disclosure. In the diagram of FIG. 2, a first device 110 may collect user-interested information from each of second and third devices 120 and 130, may obtain common interest information, and may form a group. However, other devices or the server, for example, as discussed later, may also collect the user-interested information.

In operation S200, the first device 110 receives the user-interested information from the second device 120. For example, the user-interested information may include at least one of an interest field, a gender, an age, a profession, a hobby, a relation, an area, a content usage history, an application usage history, and a phone-call time that are related to a user. Again, as discussed above, the user-interested information is not limited to the information described in this paragraph.

Also, the user-interested information may be generated in the second device 120 based on a user input. In this case, a screen of the second device 120 may display a user interface for generation of the user-interested information, and the user-interested information may be generated based on the user input via the user interface. For example, the screen of the second device 120 may display the user interface for selection of the interest field, the gender, the age, the profession, and the hobby of the user, and the second device 120 may generate the user-interested information according to a user selection input.

Also, the second device 120 may store a history about operations performed by the second device 120, thereby generating the user-interested information. For example, the second device 120 may store a content usage history, an application usage history, and a phone-call history, however, the present disclosure is not limited thereto.

In addition, the first device 110 may receive the user-interested information from the second device 120 via near field communication. However, one or more embodiments are not limited thereto, and thus the first device 110 and the second device 120 may be connected to a predetermined server and then the first device 110 may receive the user-interested information from the second device 120 via the connected server. In this case, the first device 110 and the second device 120 may connect to the server by using a predetermined marker (e.g., a barcode, a quick response (QR) code, or the like). Also, the second device 120 may provide a link address to the first device 110, wherein the first device 110 may receive the user-interested information from the second device 120 by using the link address.

In operation S202, the first device 110 receives the user-interested information from the third device 130. The user-interested information may be generated by the third device 130 based on a user input. In this case, a screen of the third device 130 may display a user interface for generation of user-interested information, and the user-interested information may be generated based on the user input via the user interface. Also, the third device 130 may store a history about operations performed by the third device 130, thereby generating the user-interested information.

Further, the first device 110 may receive the user-interested information from the third device 130 via near field communication, for example. However, one or more embodiments are not limited thereto, and thus the first device 110 and the third device 130 may be connected to a predetermined server, and then the first device 110 may receive the user-interested information from the third device 130 via the connected server. Also, the third device 130 may provide a link address to the first device 110, wherein the first device 110 may receive the user-interested information from the third device 130 by using the link address.

In operation S204, the first device 110 obtains common interest information based on the received user-interested information. The first device 110 may generate the common interest information with respect to the first device 110 and the second device 120, based on the user-interested information of the first device 110 and the user-interested information of the second device 120. The first device 110 may compare the user-interested information of the second device 120 with the user-interested information of the first device 110, may extract information about the same or similar items from among items included in the user-interested information of the first device 110 and the user-interested information of the second device 120, and then may obtain the common interest information. For example, when a profession, a gender, and an area are common in the items included in the user-interested information of the first device 110 and the user-interested information of the second device 120, information about the profession, the gender, and the area may be generated as the common interest information.

Also, the first device 110 may generate common interest information with respect to the first device 110 and the third device 130, based on the user-interested information of the first device 110 and user-interested information of the third device 130. For example, when a profession and an age are common in items included in the user-interested information of the first device 110 and the user-interested information of the third device 130, information about the profession and the age may be generated as the common interest information.

In addition, the first device 110 may generate common interest information with respect to the second device 120 and the third device 130, based on the user-interested information of the second device 120 and the user-interested information of the third device 130. For example, when a profession is common in items included in the user-interested information of the second device 120 and the user-interested information of the third device 130, information about the profession may be generated as the common interest information.

While it is described that the first device 110 generates the common interest information by using two pieces of user-interested information of two devices, one or more embodiments of the present disclosure are not limited thereto, and thus, the common interest information may be generated by using at least three pieces of user-interested information of at least three devices.

Also, the first device 110 may generate common interest information with respect to the devices 100 by using various algorithms. For example, the first device 110 may generate the common interest information by analyzing the user-interested information of the first device 110, the user-interested information of the second device 120, and the user-interested information of the third device 130 by using the various algorithms. For example, the first device 110 may obtain the common interest information by using a clustering algorithm, such as "K-means Clustering", "Multi-Gaussian with Expectation-Maximization" or the like. Also, for example, the first device 110 may obtain the common interest information by using a classification algorithm such as "naive Bayesian", "support vector machine", or the like. The various algorithms described here are examples, and thus, the present disclosure is not limited thereto.

In operation S206, the first device 110 forms a group based on the common interest information. The first device 110 may include devices into one group based on the common interest information with respect to the devices 100, wherein the devices have items equal to or greater than a predetermined number of items included in the common interest information. For example, when the number of items included the common interest information with respect to the first device 110 and the second device 120 is "3", the number of items included the common interest information with respect to the first device 110 and the third device 130 is "2", and the number of items included the common interest information with respect to the second device 120 and the third device 130 is "1", the first device 110 may include or group the first device 110 and the second device 120 into one group.

However, one or more embodiments of the present disclosure are not limited thereto, and thus, the first device 110 may form a group with respect to the devices 100 by using various algorithms. For example, the first device 110 may form the group by using the clustering algorithm such as "K-means Clustering", "Multi-Gaussian with Expectation-Maximization" or the like. Also, for example, the first device 110 may form the group by using the classification algorithm such as "naive Bayesian", "support vector machine", or the like. The various algorithms described in this paragraph are examples, and thus, the present disclosure is not limited thereto.

The first device 110 may update the formed group. In more detail, the first device 110 may receive user-interested information from the fourth device 140, and then may generate common interest information with respect to the fourth device 140 and other devices. Also, when the user-interested information of the fourth device 140 is similar to the user-interested information of the first device 110 and the user-interested information of the second device 120, the first device 110 may include the fourth device 140 into the formed group.

In operation S208, the first device 110 provides the common interest information and group information about the formed group to the server 200. Also, the first device 110 may provide the common interest information related to devices included in the formed group to the sever 200. Also, the first device 110 may generate the group information about the formed group, and may provide the group information to the server 200. For example, the group information may include at least one of a plurality of pieces of information about an age, a profession, a main interest, and an area that represents the group, however, the present disclosure is not limited thereto. Also, the group information may include information about the number of devices included in the group, however, the present disclosure is not limited thereto.

In operation S21 0, the server 200 determines additional information, based on the common interest information and the group information. The server 200 may determine the additional information that corresponds to the common interest information and the group information. For example, the additional information may include at least one of advertisement information, coupon information, and local information, however, the present disclosure is not limited thereto.

Also, the server 200 may vary the additional information according to the number of devices included in the group. When the number of devices included in the group is equal to or greater than a preset number, the server 200 may include predetermined coupon information into the additional information, as an example. For example, when the number of devices included in the group is equal to or greater than "3", the server 200 may include a '2+1 coupon' with respect to a predetermined product into the additional information.

In operation S212, the server 200 provides the additional information to the second device 120. The server 200 may provide the additional information to the devices included in the group, however, as an example, FIG. 2 illustrates that the server 200 provides the additional information to the first and second devices. Thus, when the group includes the second device 120, the server 200 may provide the additional information to the second device 120.

In operation S214, the server 200 provides the additional information to the first device 110. When the group includes the first device 110, the server 200 may provide the additional information to the first device 110.

In operation S216, the first device 110 provides feedback information to the server 200. The feedback information is information that is fed back with respect to the additional information, and for example, the feedback information may include an evaluation by a user of the first device 110 with respect to the additional information, and information about an operation of the first device 110 based on the additional information.

In operation S218, the second device 120 provides feedback information to the server 200. The feedback information may include an evaluation by a user of the second device 120 with respect to the additional information, and information about an operation of the second device 120 based on the additional information.

In operation S220, the server 200 stores a plurality of pieces of the feedback information. The feedback information stored in the server 200 may be used by one of the first device 110 and the server 200 to obtain the common interest information or to form the group.

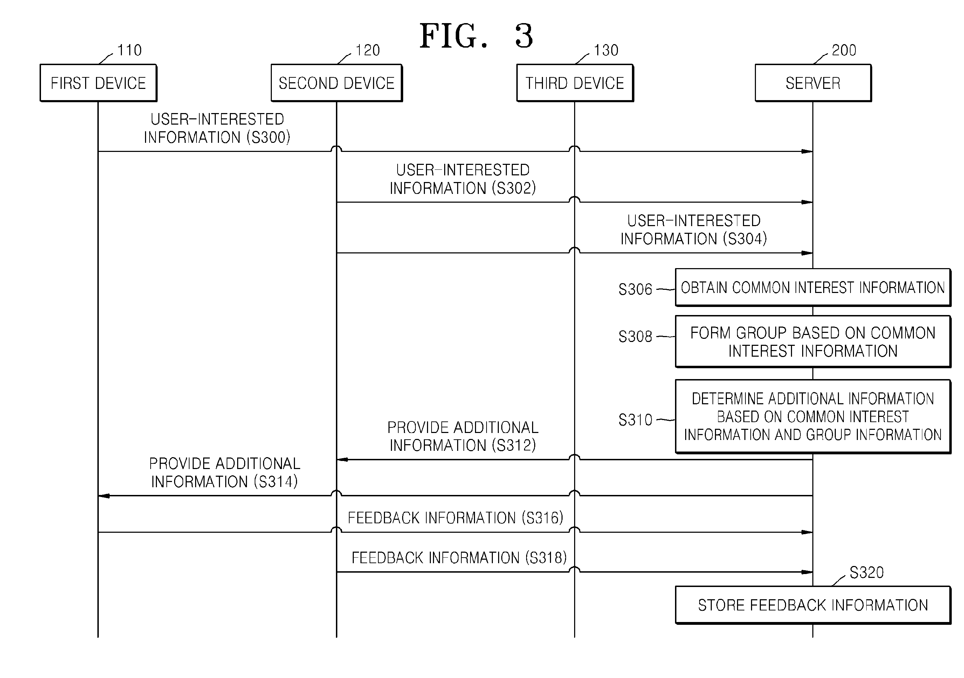

FIG. 3 is a diagram illustrating a method of providing additional information to a group of devices, according to another embodiment of the present disclosure. In the flowchart of FIG. 3, the server 200 may obtain common interest information, based on user-interested information.

In operation S300, the server 200 receives user-interested information from the first device 110. The user-interested information may include at least one of an interest field, a gender, an age, a profession, a hobby, a relation, an area, a content usage history, an application usage history, and a phone-call time that are related to a user, however, the present disclosure is not limited thereto.

Also, the user-interested information may be generated by the first device 110 based on a user input. In this case, a screen of the first device 110 may display a user interface for generation of the user-interested information, and the user-interested information may be generated based on the user input via the user interface. For example, the screen of the first device 110 may display the user interface for selection of the interest field, the gender, the age, the profession, and the hobby of the user, and the first device 110 may generate the user-interested information according to a user selection input.

Also, the first device 110 may store a history about operations performed by the first device 110, thereby generating the user-interested information. For example, the first device 110 may store a content usage history, an application usage history, and a phone-call history, however, the present disclosure is not limited thereto.

In operation S302, the server 200 receives user-interested information from the second device 120. The user-interested information may be generated by the second device 120 based on a user input. In this case, a screen of the second device 120 may display a user interface for generation of the user-interested information, and the user-interested information may be generated based on the user input via the user interface. Also, the second device 120 may store a history about operations performed by the second device 120, thereby generating the user-interested information.

In operation S304, the server 200 receives user-interested information from the third device 130. The user-interested information may be generated by the first device 130 based on a user input. In this case, a screen of the third device 130 may display a user interface for generation of the user-interested information, and the user-interested information may be generated based on the user input via the user interface. Also, the third device 130 may store a history about operations performed by the third device 130, thereby generating the user-interested information.

In operation S306, the server 200 obtains common interest information based on the user-interested information. The server 200 may generate the common interest information with respect to at least the first device 110 and the second device 120, based on the user-interested information of the first device 110 and the user-interested information of the second device 120. The server 200 may compare the user-interested information of the second device 120 with the user-interested information of the first device 110, may extract information about the same or similar items from among items included in the user-interested information of the first device 110 and the user-interested information of the second device 120, and then may obtain the common interest information. For example, when a profession, a gender, and an area are common in the items included in the user-interested information of the first device 110 and the user-interested information of the second device 120, information about the profession, the gender, and the area may be generated as the common interest information.

Also, the server 200 may generate common interest information with respect to the first device 110 and the third device 130, based on the user-interested information of the first device 110 and user-interested information of the third device 130. For example, when a profession and an age are common in items included in the user-interested information of the first device 110 and the user-interested information of the third device 130, information about the profession and the age may be generated as the common interest information.

Also, the server 200 may generate common interest information with respect to the second device 120 and the third device 130, based on the user-interested information of the second device 120 and the user-interested information of the third device 130. For example, when a profession is common in items included in the user-interested information of the second device 120 and the user-interested information of the third device 130, information about the profession may be generated as the common interest information.

While it is described that the server 200 generates the common interest information by using two pieces of user-interested information of two devices, one or more embodiments of the present disclosure are not limited thereto, and thus, the common interest information may be generated by using at least three pieces of user-interested information of at least three devices.

Also, the server 200 may generate common interest information with respect to the devices 100 by using various algorithms. The server 200 may generate the common interest information by analyzing the user-interested information of the first device 110, the user-interested information of the second device 120, and the user-interested information of the third device 130 by using the various algorithms. For example, the server 200 may obtain the common interest information by using a clustering algorithm such as "K-means Clustering", "Multi-Gaussian with Expectation-Maximization" or the like. Also, for example, the server 200 may obtain the common interest information by using a classification algorithm such as "naive Bayesian", "support vector machine", or the like.

In operation S308, the server 200 forms a group based on the common interest information. The server 200 may include devices into one group based on the common interest information with respect to the devices 100, wherein the devices have items equal to or greater than a predetermined number of items included in the common interest information. For example, when the number of items included the common interest information with respect to the first device 110 and the second device 120 is "3", the number of items included the common interest information with respect to the first device 110 and the third device 130 is "2", and the number of items included the common interest information with respect to the second device 120 and the third device 130 is "1", the server 200 may include the first device 110 and the second device 120 into one group.

However, one or more embodiments of the present disclosure are not limited thereto, and thus, the server 200 may form a group with respect to the devices 100 by using various algorithms. For example, the server 200 may form the group by using the clustering algorithm such as "K-means Clustering", "Multi-Gaussian with Expectation-Maximization" or the like. Also, for example, the server 200 may form the group by using the classification algorithm such as "naive Bayesian", "support vector machine", or the like.

The server 200 may update the formed group. In more detail, the server 200 may receive user-interested information from the fourth device 140, and then may generate common interest information with respect to the fourth device 140 and other devices. Also, when the user-interested information of the fourth device 140 is similar to the user-interested information of the first device 110 and the user-interested information of the second device 120, the server 200 may include the fourth device 140 into the formed group.

In operation S31 0, the server 200 determines additional information based on the common interest information and group information about the formed group. The server 200 may generate the group information about the formed group and then may determine the additional information that corresponds to the common interest information and the group information. For example, the group information may include at least one of a plurality of pieces of information about an age, a profession, a main interest, and an area that represent the group. Also, the group information may include information about the number of devices included in the group.

Also, the server 200 may vary the additional information according to the number of devices included in the group. When the number of devices included in the group is equal to or greater than a preset number, the server 200 may include predetermined coupon information into the additional information. For example, when the number of devices included in the group is equal to or greater than "3", the server 200 may include a '2+1 coupon' with respect to a predetermined product into the additional information.

In operation S312, the server 200 provides the additional information to the second device 120. The server 200 may provide the additional information to the devices included in the group. Thus, when the group includes the second device 120, the server 200 may provide the additional information to the second device 120.

In operation S314, the server 200 provides the additional information to the first device 110. When the group includes the first device 110, the server 200 may provide the additional information to the first device 110.

In operation S316, the first device 110 provides feedback information to the server 200. The feedback information is information that is fed back with respect to the additional information, and for example, the feedback information may include an evaluation by a user of the first device 110 with respect to the additional information, and information about an operation of the first device 110 based on the additional information.

In operation S318, the second device 120 provides feedback information to the server 200. The feedback information may include an evaluation by a user of the second device 120 with respect to the additional information, and information about an operation of the second device 120 based on the additional information.

In operation S320, the server 200 stores a plurality of pieces of the feedback information. The feedback information stored in the server 200 may be used by one of the first device 110 and the server 200 to obtain the common interest information or to form the group.

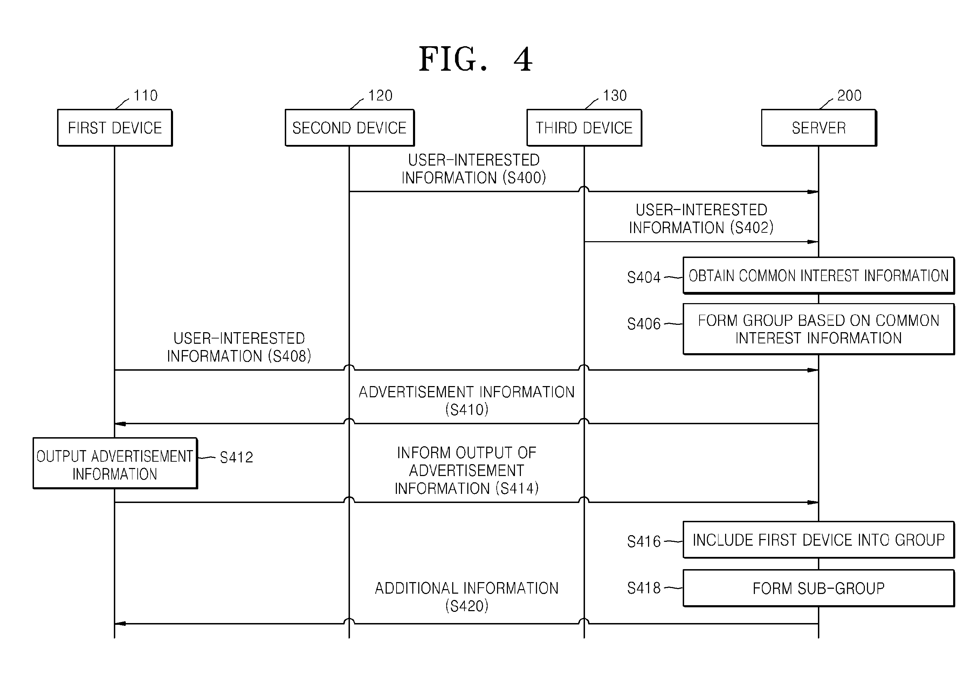

FIG. 4 is a diagram illustrating a method of providing, by the server 200, additional information with respect to a group of devices to the first device 110 when the first device 110 receives advertisement information from the server 200, according to an embodiment of the present disclosure.

In operation S400, the server 200 receives user-interested information from the second device 120. The user-interested information may be generated by the second device 120 based on a user input. In this case, a screen of the second device 120 may display a user interface for generation of the user-interested information, and the user-interested information may be generated based on the user input via the user interface. Also, the second device 120 may store a history about operations performed by the second device 120, thereby generating the user-interested information.

In operation S402, the server 200 receives user-interested information from the third device 130. The user-interested information may be generated by the third device 130 based on a user input. In this case, a screen of the third device 130 may display a user interface for generation of the user-interested information, and the user-interested information may be generated based on the user input via the user interface. Also, the third device 130 may store a history about operations performed by the third device 130, thereby generating the user-interested information.

In operation S404, the server 200 obtains common interest information based on the received user-interested information. The server 200 may generate the common interest information with respect to the second device 120 and the third device 130, based on the user-interested information of the second device 120 and user-interested information of the third device 130. The server 200 may compare the user-interested information of the second device 120 with the user-interested information of the third device 130, may extract information about the same or similar items from among items included in the user-interested information of the second device 120 and the user-interested information of the third device 130, and then may obtain the common interest information.

For example, the server 200 may obtain the common interest information by using a clustering algorithm such as "K-means Clustering", "Multi-Gaussian with Expectation-Maximization" or the like. Also, for example, the server 200 may obtain the common interest information by using a classification algorithm such as "naive Bayesian", "support vector machine", or the like.

In operation S406, the server 200 forms a group based on the common interest information. The server 200 may include devices into one group based on the common interest information with respect to the devices 100, wherein the devices have items equal to or greater than a predetermined number of items included in the common interest information. For example, the server 200 may form the group by using the clustering algorithm such as "K-means Clustering", "Multi-Gaussian with Expectation-Maximization" or the like. Also, the server 200 may form the group by using the classification algorithm such as "naive Bayesian", "support vector machine", or the like.

In operation S408, the server 200 receives user-interested information from the first device 110. The user-interested information may be generated by the first device 110 based on a user input. In this case, a screen of the first device 110 may display a user interface for generation of the user-interested information, and the user-interested information may be generated based on the user input via the user interface. Also, the first device 110 may store a history about operations performed by the first device 110, thereby generating the user-interested information.

In operation S410, the server 200 provides predetermined advertisement information to the first device 110. The server 200 may provide the predetermined advertisement information to the first device 110, based on the user-interested information of the first device 110 which is received from the first device 110. Also, the server 200 may provide the predetermined advertisement information to the first device 110, based on device information of the first device 110. In this case, the device information is about a device type, a service set identifier (SSID), or the like, and may be previously provided from the first device 110 to the server 200.

In operation S412, the first device 110 outputs the advertisement information received from the server 200, and in operation S414, the first device 110 informs the server 200 of the output of the advertisement information.

In operation S416, the server 200 includes the first device 110 into a predetermined group. The server 200 may include the first device 110 into the group, based on the user-interested information of the first device 110 and the common interest information of the group that is formed in operation S406. For example, the server 200 may include the first device 110 into the group, based on the user-interested information of the first device 110 and similarity between items that are included in the common interest information of the group.

In operation S418, the server 200 forms a sub-group of the group that is formed in operation S406. As the first device 110 is included in the group formed in operation S406, if the number of devices included in the group is greater than a preset number, the server 200 may form the sub-group including the first device 110. The server 200 may include the devices into one sub-group based on the common interest information of the devices included in the group, wherein the devices have items equal to or greater than a predetermined number of items included in the common interest information.

In operation S420, the server 200 provides additional information to the first device 110. The server 200 may generate the additional information based on at least one of the user-interested information of the first device 110, the common interest information of the group, and group information about the group. For example, the group information may include at least one of a plurality of pieces of information about an age, a profession, a main interest, and an area that represent the group. Also, the group information may include information about the number of devices included in the group.

Also, the server 200 may vary the additional information according to the number of devices included in the group. When the number of devices included in the group is equal to or greater than a preset number, the server 200 may include predetermined coupon information into the additional information. For example, when the number of devices included in the group is equal to or greater than "3", the server 200 may include a '2+1 coupon' with respect to a predetermined product into the additional information. Also, the server 200 may provide the additional information to the first device 110.

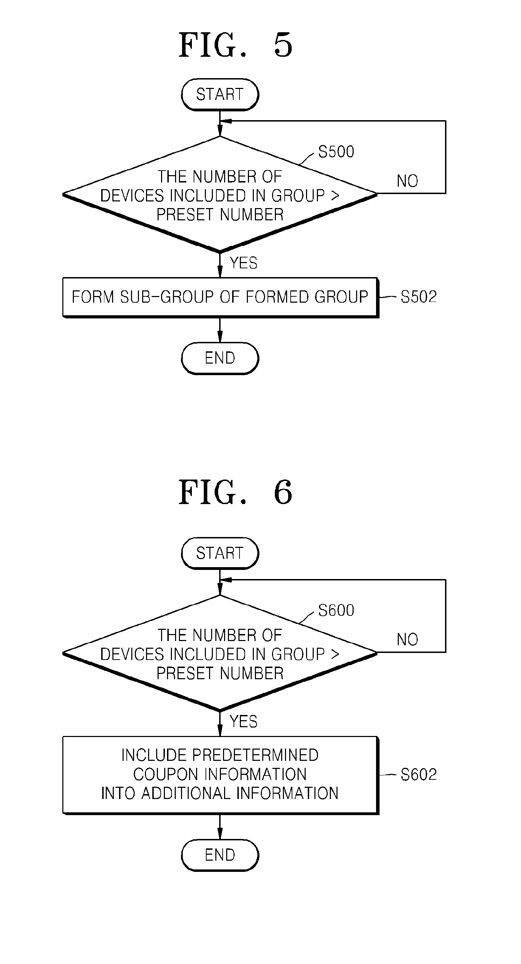

FIG. 5 is a flowchart of a method of forming a group, performed by the first device 110 or the server 200, according to an embodiment of the present disclosure.

In operation S500, the first device 110 or the server 200 determines whether the number of devices included in the group that is formed in operation S206 of FIG. 2 or S308 of FIG. 3 is greater than a preset number. The first device 110 or the server 200 may determine whether the number of devices included in the group is greater than the preset number, based on the group information.

When the number of devices is greater than the preset number, in operation S502, the first device 110 or the server 200 forms a sub-group of the formed group. The first device 110 or the server 200 may include the devices into the sub-group based on the common interest information of the devices included in the group, wherein the devices have items equal to or greater than a predetermined number of items included in the common interest information.

However, one or more embodiments are not limited thereto, and thus, the first device 110 or the server 200 may form the sub-group by using various algorithms. For example, the first device 110 or the server 200 may form the sub-group by using a clustering algorithm such as "K-means Clustering", "Multi-Gaussian with Expectation-Maximization" or the like. Also, for example, the first device 110 or the server 200 may form the sub-group by using a classification algorithm such as "naive Bayesian", "support vector machine", or the like. Also, the first device 110 or the server 200 may update the sub-group. When a new device is included in the group, the first device 110 or the server 200 may include the new device into the sub-group.

FIG. 6 is a flowchart of a method of determining additional information, performed by the server 200 for example, according to an embodiment of the present disclosure.

In operation S600, for example, the server 200 determines whether the number of devices included in the group that is formed in operation S206 of FIG. 2 or S308 of FIG. 3 is greater than a preset number. The server 200 may determine whether the number of devices included in the group is greater than the preset number, based on the group information.

When the number of devices is greater than the preset number, in operation S602, the server 200 includes predetermined coupon information into the additional information. For example, when the number of devices included in the group is equal to or greater than '3', a "2+1 coupon" may be included in the additional information. Here, the "2+1 coupon" means a coupon by which a user may purchase 2 products and may additionally obtain 1 product free of charge.

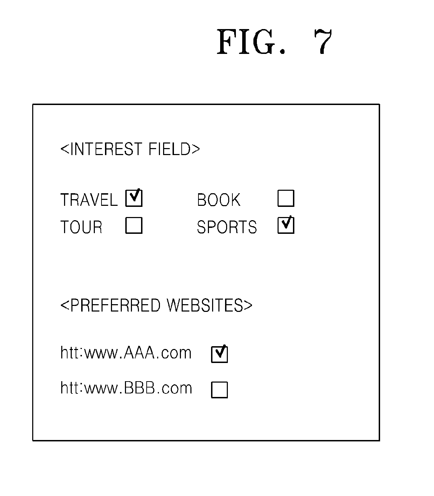

FIG. 7 illustrates an example of a user interface that is displayed by one of the devices 100 so as to generate user-interested information.

Referring to FIG. 7, the user interface for generation of the user-interested information may include a list for selection of user-interested fields and a list for selection of user-preferred websites. The list for selection of user-interested fields and the list for selection of user-preferred websites may be determined and recommended based on a usage history of a user who uses a device. For example, the device may obtain information about websites that the user frequently visits. Also, the device may generate the list for selection of user-interested fields and the list for selection of user-preferred websites, based on attributes of the websites.

When the user selects a predetermined item from the list for selection of user-interested fields, the device may include information about the selected user-interested field into the user-interested information. Also, when the user selects a predetermined item from the list for selection of user-preferred websites, the device may include information about the selected website into the user-interested information.

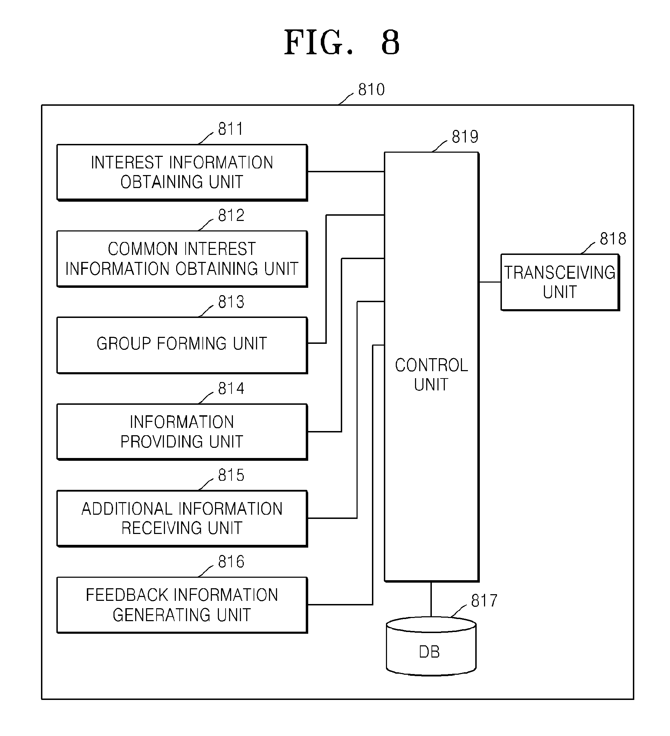

FIG. 8 is a block diagram of the first device 810, according to an example embodiment of the present disclosure.

As illustrated in FIG. 8, the first device 810 may include an interest information obtaining unit 811, a common interest information obtaining unit 812, a group forming unit 813, an information providing unit 814, an additional information receiving unit 815, a feedback information generating unit 816, a database (DB) 817, a transceiving unit 818, and a control unit 819. At least one of the above-described units may include at least one processing device. Further, the first device 810 may or may not be the first device 110.

The interest information obtaining unit 811 obtains user-interested information from another device. The interest information obtaining unit 811 may receive a plurality of pieces of user-interested information from the second device 120 and the third device 130. The user-interested information may include at least one of an interest field, a gender, an age, a profession, a hobby, a relation, an area, a content usage history, an application usage history, and a phone-call time that are related to a user, however, the present disclosure is not limited thereto.

Further, the interest information obtaining unit 811 may generate user-interested information of the first device 810. In this case, a screen of the first device 810 may display a user interface for generation of the user-interested information, and the user-interested information may be generated based on a user input via the user interface.

The common interest information obtaining unit 812 obtains common interest information based on the received user-interested information. The common interest information obtaining unit 812 may generate the common interest information with respect to the first device 810 and the second device 120, based on the user-interested information of the first device 810 and the user-interested information of the second device 120. The common interest information obtaining unit 812 may compare the user-interested information of the second device 120 with the user-interested information of the first device 810, may extract information about the same or similar items from among items included in the user-interested information of the first device 810 and the user-interested information of the second device 120, and then may obtain the common interest information. For example, when a profession, a gender, and an area are common in the items included in the user-interested information of the first device 810 and the user-interested information of the second device 120, the common interest information obtaining unit 812 may generate information about the profession, the gender, and the area, as the common interest information.

Also, the common interest information obtaining unit 812 may generate common interest information with respect to the first device 810 and the third device 130, based on the user-interested information of the first device 810 and user-interested information of the third device 130. For example, when a profession and an age are common in items included in the user-interested information of the first device 810 and the user-interested information of the third device 130, the common interest information obtaining unit 812 may generate information about the profession and the age, as the common interest information.

Also, the common interest information obtaining unit 812 may generate common interest information with respect to the second device 120 and the third device 130, based on the user-interested information of the second device 120 and the user-interested information of the third device 130. For example, when a profession is common in items included in the user-interested information of the second device 120 and the user-interested information of the third device 130, the common interest information obtaining unit 812 may generate information about the profession, as the common interest information.

However, one or more embodiments of the present disclosure are not limited thereto, and thus, the common interest information obtaining unit 812 may generate common interest information with respect to the plurality of devices 100 by using various algorithms. The common interest information obtaining unit 812 may generate the common interest information by analyzing the user-interested information of the first device 810, the user-interested information of the second device 120, and the user-interested information of the third device 130 by using the various algorithms. For example, the common interest information obtaining unit 812 may obtain the common interest information by using a clustering algorithm such as "K-means Clustering", "Multi-Gaussian with Expectation-Maximization" or the like. Also, for example, the common interest information obtaining unit 812 may obtain the common interest information by using a classification algorithm such as "naive Bayesian", "support vector machine", or the like.

The group forming unit 813 forms a group based on the common interest information. The group forming unit 813 may include devices into one group based on the common interest information with respect to the devices 100, wherein the devices have items equal to or greater than a predetermined number of items included in the common interest information. For example, when the number of items included the common interest information with respect to the first device 810 and the second device 120 is "3", the number of items included the common interest information with respect to the first device 810 and the third device 130 is "2", and the number of items included the common interest information with respect to the second device 120 and the third device 130 is "1", the group forming unit 813 may include the first device 810 and the second device 120 into one group.

However, one or more embodiments of the present disclosure are not limited thereto, and thus, the group forming unit 813 may form a group with respect to the devices 100 by using various algorithms. For example, the group forming unit 813 may form the group by using the clustering algorithm such as "K-means Clustering", "Multi-Gaussian with Expectation-Maximization" or the like. Also, for example, the group forming unit 813 may form the group by using the classification algorithm such as "naive Bayesian", "support vector machine", or the like.

The group forming unit 813 may update the formed group. In more detail, the group forming unit 813 may receive user-interested information from the fourth device 140, and then may generate common interest information with respect to the fourth device 140 and other devices. Also, when the user-interested information of the fourth device 140 is similar to the user-interested information of the first device 110 and the user-interested information of the second device 120, the group forming unit 813 may include the fourth device 140 into the formed group.

The information providing unit 814 provides the common interest information and group information about the formed group to the server 200. Also, the information providing unit 814 may provide the common interest information related to devices included in the formed group to the sever 200. Also, the information providing unit 814 may generate the group information about the formed group, and may provide the group information to the server 200. For example, the group information may include at least one of a plurality of pieces of information about an age, a profession, a main interest, and an area that represent the group. Also, the group information may include information about the number of devices included in the group.

Also, the information providing unit 814 may provide the user-interested information of the first device 810 to the server 200. In this case, the server 200 may generate the common interest information and may form the group. Also, the information providing unit 814 may provide feedback information, which will be described below, to the server 200.

The additional information receiving unit 815 receives additional information from the server 200. The server 200 may determine the additional information, based on the common interest information and the group information. The additional information receiving unit 815 may receive the additional information, which is determined by the server 200, from the server 200. For example, the additional information may include at least one of advertisement information, coupon information, and local information.

The feedback information generating unit 816 generates the feedback information with respect to the additional information. The feedback information generating unit 816 may generate the feedback information based on a user input, but is not limited thereto. The feedback information is information that is fed back with respect to the additional information, and for example, the feedback information may include an evaluation by a user of the first device 810 with respect to the additional information, and information about an operation of the first device 110 based on the additional information.

The DB 817 stores various types of information so that the first device 810 may form the group with another device and may receive the additional information from the server 200. The DB 817 may store the user-interested information, the common interest information, and the group information, but is not limited thereto.

The transceiving unit 818 exchanges various types of information with another device and the server 200 so that the first device 810 may form the group with another device and may receive the additional information from the server 200.

The control unit 819 controls all operations performed by the first device 810. In more detail, the control unit 819 controls the interest information obtaining unit 811, the common interest information obtaining unit 812, the group forming unit 813, the information providing unit 814, the additional information receiving unit 815, the feedback information generating unit 816, the DB 817, and the transceiving unit 818, so that the first device 810 may form the group with another device and may receive the additional information from the server 200.

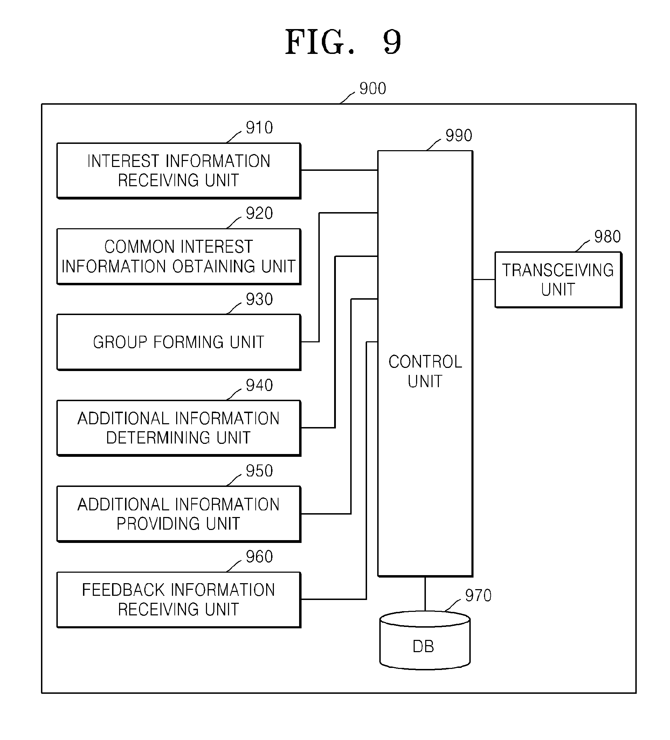

FIG. 9 is a block diagram of the server 900, according to an embodiment of the present disclosure. As illustrated in FIG. 9, the server 900 includes an interest information receiving unit 910, a common interest information obtaining unit 920, a group forming unit 930, an additional information determining unit 940, an additional information providing unit 950, a feedback information receiving unit 960, a DB 970, a transceiving unit 980, and a control unit 990. The server 900 may or may not be server 200.

The interest information receiving unit 910 receives a plurality of pieces of user-interested information from the plurality of devices 100. The interest information receiving unit 910 may receive a plurality of pieces of user-interested information from the first device 110, the second device 120, and the third device 130. For example, the user-interested information may include at least one of an interest field, a gender, an age, a profession, a hobby, a relation, an area, a content usage history, an application usage history, and a phone-call time that are related to a user, however, the present disclosure is not limited thereto.

The common interest information obtaining unit 920 obtains common interest information based on the plurality of pieces of user-interested information. The common interest information obtaining unit 920 may generate the common interest information with respect to the first device 110 and the second device 120, based on the user-interested information of the first device 110 and the user-interested information of the second device 120. The common interest information obtaining unit 920 may compare the user-interested information of the second device 120 with the user-interested information of the first device 110, may extract information about the same or similar items from among items included in the user-interested information of the first device 110 and the user-interested information of the second device 120, and then may obtain the common interest information. For example, when a profession, a gender, and an area are common in the items included in the user-interested information of the first device 110 and the user-interested information of the second device 120, the common interest information obtaining unit 920 may generate information about the profession, the gender, and the area, as the common interest information.

Also, the common interest information obtaining unit 920 may generate common interest information with respect to the first device 110 and the third device 130, based on the user-interested information of the first device 110 and user-interested information of the third device 130. For example, when a profession and an age are common in items included in the user-interested information of the first device 110 and the user-interested information of the third device 130, the common interest information obtaining unit 920 may generate information about the profession and the age, as the common interest information.

Also, the common interest information obtaining unit 920 may generate common interest information with respect to the second device 120 and the third device 130, based on the user-interested information of the second device 120 and the user-interested information of the third device 130. For example, when a profession is common in items included in the user-interested information of the second device 120 and the user-interested information of the third device 130, the common interest information obtaining unit 920 may generate information about the profession, as the common interest information.

While it is described that the common interest information obtaining unit 920 generates the common interest information by using two pieces of user-interested information of two devices, one or more embodiments of the present disclosure are not limited thereto, and thus, the common interest information obtaining unit 920 may generate the common interest information by using at least three pieces of user-interested information of at least three devices.

The common interest information obtaining unit 920 may receive common interest information that is generated by the first device 110.

Also, the server 900 may generate the common interest information with respect to the plurality of devices 100 by using the various algorithms. For example, the server 900 may generate the common interest information by analyzing the user-interested information of the first device 110, the user-interested information of the second device 120, and the user-interested information of the third device 130 by using the various algorithms. For example, the server 900 may obtain the common interest information by using a clustering algorithm such as "K-means Clustering", "Multi-Gaussian with Expectation-Maximization" or the like. Also, for example, the server 900 may obtain the common interest information by using a classification algorithm such as "naive Bayesian", "support vector machine", or the like.

The group forming unit 930 forms a group based on the common interest information. The group forming unit 930 may include devices into one group based on the common interest information with respect to the devices 100, wherein the devices have items equal to or greater than a predetermined number of items included in the common interest information. For example, when the number of items included the common interest information with respect to the first device 110 and the second device 120 is "3", the number of items included the common interest information with respect to the first device 110 and the third device 130 is "2", and the number of items included the common interest information with respect to the second device 120 and the third device 130 is "1", the group forming unit 930 may include the first device 110 and the second device 120 into one group.

However, one or more embodiments of the present disclosure are not limited thereto, and thus, the group forming unit 930 may form a group with respect to the devices 100 by using various algorithms. For example, the group forming unit 930 may form the group by using the clustering algorithm such as "K-means Clustering", "Multi-Gaussian with Expectation-Maximization" or the like. Also, for example, the group forming unit 930 may form the group by using the classification algorithm such as "naive Bayesian", "support vector machine", or the like.

Also, the group forming unit 930 may update the formed group. In more detail, the group forming unit 930 may receive user-interested information from the fourth device 140, and then may generate common interest information with respect to the fourth device 140 and other devices. Also, when the user-interested information of the fourth device 140 is similar to the user-interested information of the first device 110 and the user-interested information of the second device 120, the group forming unit 930 may include the fourth device 140 into the formed group.

The additional information determining unit 940 determines additional information based on the common interest information and group information about the formed group. The additional information determining unit 940 may generate the group information about the formed group and then may determine the additional information that corresponds to the common interest information and the group information. For example, the group information may include at least one of a plurality of pieces of information about an age, a profession, a main interest, and an area that represent the group. Also, the group information may include information about the number of devices included in the group.

Also, the additional information determining unit 940 may vary the additional information according to the number of devices included in the group. When the number of devices included in the group is equal to or greater than a preset number, the additional information determining unit 940 may include predetermined coupon information into the additional information. For example, when the number of devices included in the group is equal to or greater than "3", the additional information determining unit 240 may include a '2+1 coupon' with respect to a predetermined product into the additional information.

The additional information determining unit 940 may receive the group information from the first device 110 and then may determine the additional information by using the received group information.

The additional information providing unit 950 provides the additional information to a device included in the group. Thus, the additional information providing unit 950 may provide the additional information to the first device 110 and the second device 120 that are included in the group.

The feedback information receiving unit 960 receives feedback information from the device included in the group. The feedback information is information that is fed back with respect to the additional information, and for example, the feedback information may include an evaluation by a user of the first device 110 with respect to the additional information, and information about an operation of the first device 110 based on the additional information.

The DB 970 stores various types of information so that the server 900 may form the group based on the plurality of pieces of user-interested information of the plurality of devices 100 and may generate the additional information.

The transceiving unit 980 exchanges various types of information with the devices 100 so that the server 900 may form the group based on the plurality of pieces of user-interested information of the devices 100 and may generate the additional information.

The control unit 990 controls all operations performed by the server 900. In more detail, the control unit 990 controls the interest information receiving unit 910, the common interest information obtaining unit 920, the group forming unit 930, the additional information determining unit 940, the additional information providing unit 950, the feedback information receiving unit 960, the DB 970, and the transceiving unit 980, so that the server 900 may form the group and may generate the additional information based on the plurality of pieces of user-interested information of the devices 100.

The one or more embodiments of the present disclosure may be embodied as a recording medium, e.g., a program module to be executed in computers, which include computer-readable commands. The computer storage medium may include any usable medium that may be accessed by computers, volatile and non-volatile medium, and detachable and non-detachable medium. Also, the computer storage medium may include a computer storage medium and a communication medium. The computer storage medium includes all of volatile and non-volatile medium, and detachable and non-detachable medium which are designed to store information including computer readable commands, data structures, program modules or other data. The communication medium includes computer-readable commands, a data structure, a program module, and other transmission mechanism, and includes other information transmission mediums. Examples of the computer-readable recording media include a magnetic recording apparatus, an optical disk, a magneto-optical disk, and/or a semiconductor memory (for example, RAM, ROM, etc.). Examples of the magnetic recording apparatus include a hard disk device (HDD), a flexible disk (FD), and a magnetic tape (MT). Examples of the optical disk include a DVD (Digital Versatile Disc), a DVD-RAM, a CD-ROM (Compact Disc - Read Only Memory), and a CD-R (Recordable)/RW.

Further, according to an aspect of the embodiments, any combinations of the described features, functions and/or operations can be provided.

Moreover, the devices discussed and shown above may include at least one processor to execute at least one of the above-described units and methods.

The present disclosure may, however, be embodied in many different forms and should not be construed as being limited to the embodiments set forth herein; rather, these embodiments are provided so that this disclosure will be thorough and complete, and will fully convey the inventive concept to those of ordinary skill in the art. For example, configuring elements that are singular forms may be executed in a distributed fashion, and also, configuring elements that are distributed may be combined and then executed.

While the present disclosure has been particularly shown and described with reference to exemplary embodiments thereof, it will be understood by those of ordinary skill in the art that various changes in form and details may be made therein without departing from the spirit and scope of the present disclosure as defined by the following claims.

Although a few embodiments have been shown and described, it would be appreciated by those skilled in the art that changes may be made in these embodiments without departing from the principles and spirit of the invention, the scope of which is defined in the claims and their equivalents.

## Claims

1. A method of receiving additional information with respect to a group comprising first and second devices, the method comprising:
receiving, by a processor, user-interested information from the second device;
obtaining common interest information with respect to a user of the first device and a user of the second device, based on user-interested information of the first device and the received user-interested information of the second device;
forming a group based on the obtained common interest information;
providing the common interest information and information about the formed group to a server; and
receiving additional information, with respect to the common interest information, from the server.

2. The method of claim 1, wherein the method is performed by the first device, and wherein the group is formed based on the obtained common interest information with respect to the first device and the second device.

3. The method of claim 1, wherein the additional information is provided from the server to the second device included in the group.

4. The method of claim 1, wherein the receiving of the user-interested information from the second device comprises receiving the user-interested information from the second device via near field communication.

5. The method of claim 1, wherein the user-interested information comprises at least one of an interest field, a gender, an age, a profession, a hobby, a relation, an area, a content usage history, an application usage history, and a phone-call time that relate to a user.

6. The method of claim 5, wherein the user-interested information is generated based on a user input via a user interface.

7. The method of claim 1, wherein, when the number of devices comprised in the group is equal to or greater than a preset number, the forming of the group further comprises forming a sub-group of the group.

8. The method of claim 1, wherein the obtaining of the common interest information comprises generating the common interest information based on similarity between items included in the user-interested information of the first device and the user-interested information of the second device.

9. The method of claim 1, wherein the information about the formed group comprises at least one of a plurality of pieces of information about an age, a profession, a main interest, and an area that represent the formed group.

10. The method of claim 1, wherein the additional information comprises at least one of advertisement information, coupon information, and local information determined based on the obtained common interest information.

11. The method of claim 1, wherein the information about the formed group comprises information about a number of devices comprised in the group, and
wherein the additional information varies according to the number of the devices comprised in the group.

12. The method of claim 11, wherein, when the number of the devices comprised in the group is equal to or greater than a preset number, the additional information comprises predetermined coupon information.

13. The method of claim 1, further comprising:
receiving user-interested information from a third device;
updating the common interest information based on the user-interested information of the first device, the user-interested information of the second device, and the user-interested information of the third device; and
updating the group based on the updated common interest information.

14. A method of providing additional information with respect to a group comprising first and second devices, the method comprising:
receiving common interest information and group information from the first device;
determining the additional information based on the common interest information and the group information; and
providing the additional information to the first device,
wherein the common interest information is generated by the first device, based on user-interested information of the first device and user-interested information of the second device.

15. A method of providing additional information with respect to a group comprising first and second devices, the method comprising:
receiving user-interested information from each of the first device and the second device;
obtaining common interest information with respect to a user of the first device and a user of the second device, based on the received user-interested information of the first device and the received user-interested information of the second device;
forming a group based on the obtained common interest information;
generating the additional information based on the obtained common interest information and group information about the group; and
providing the additional information to the first device and the second device.
